# FASCICULE DE BREVET EUROPEEN

(11) **EP 4 493 833 B1**
(45) Date de publication et mention de la délivrance du brevet: **06.08.2025**
(21) Numéro de dépôt: 23730047.0
(22) Date de dépôt: 30.05.2023
(51) Int. Cl.: F16C 33/58, F16C 33/60, F16C 19/26, F16C 33/78, D03C 1/14

(54) **ROULEMENT ÉQUIPÉ D'UN FLASQUE PRÉSENTANT UN REPLI AXIAL ET SON PROCÉDÉ DE FABRICATION**
WÄLZLAGER MIT EINEM FLANSCH MIT EINER AXIALFALTUNG UND VERFAHREN ZUR HERSTELLUNG DAVON
ROLLING BEARING PROVIDED WITH A FLANGE HAVING AN AXIAL FOLD AND METHOD FOR MANUFACTURING SAME

(30) Priorité: 09.06.2022 FR 2205557
(43) Date de publication de la demande: 22.01.2025
(73) Titulaire: NTN Europe, 74000 Annecy (FR)
(72) Inventeur: MOUGIN, Etienne, 74940 Annecy (FR)
(74) Mandataire: Alatis
(86) Numéro de dépôt international: PCT/EP2023/064354
(87) Numéro de publication internationale: WO 2023/237376

(56) Documents cités:
- FR-A1- 2 914 031
- FR-A1- 3 092 632
- FR-A1- 3 095 482
- JP-A- H08 326 763
- US-A1- 2008 205 807

## Description

### DOMAINE TECHNIQUE DE L'INVENTION

L'invention concerne un roulement, et plus particulièrement un roulement équipé de flasques permettant un maintien axial relatif des bagues, extérieure et intérieure, du roulement, ainsi que son procédé de fabrication.

L'invention se rapporte plus spécifiquement à un tel roulement destiné à constituer un galet de mécanique d'armures d'un métier à tisser.

### ETAT DE LA TECHNIQUE ANTERIEURE

De manière connue, les roulements mécaniques comprennent une bague intérieure et une bague extérieure formant entre elles un espace de roulement dans lequel sont disposés des corps roulants. Pour certaines applications présentant des contraintes d'encombrement axial importantes, les roulements ne sont pas équipés de collets permettant de maintenir axialement les corps roulants et de centrer les bagues l'une par rapport à l'autre par l'intermédiaire des corps roulants.

Dans ces circonstances, il est connu d'utiliser des déflecteurs permettant d'assurer le guidage de la bague extérieure par rapport à la bague intérieure, de guider les corps roulants, et de constituer une barrière étanche entre l'espace de roulement et l'extérieur de sorte à éviter les intrusions de polluants dans le roulement et limiter les fuites de lubrifiant de l'intérieur vers l'extérieur du roulement par centrifugation, d'autre part. Ces déflecteurs permettent en outre d'éviter le démontage accidentel du roulement.

Il a été proposé, dans le document FR2914031A1, de fixer des déflecteurs présentant une forme de rondelle annulaire sur la bague intérieure. Les rondelles présentent un rebord d'extrémité annulaire replié sur lui-même, permettant leur sertissage sur la bague intérieure. Mais avec cette solution, la largeur des chemins de roulement est sensiblement inférieure à celle des bagues de roulement, et la capacité du roulement est limitée pour un encombrement axial donné.

Dans le document FR3092632A1, qui divulgue les caractéristiques du préambule de la revendication 1, il a été proposé de sertir un flasque présentant un biseau dans une gorge annulaire d'une bague de roulement. La gorge de sertissage permet d'introduire un outil de sertissage qui déforme un flanc de ladite gorge de sertissage pour faire fluer la matière de la bague de roulement et former un rabat de matière venant enchâsser le flasque. Le biseau laisse alors subsister un volume disponible que vient remplir le rabat de matière, ce qui permet à celui-ci d'assurer sa fonction de sertissage sans faire de bourrelet dépassant axialement du roulement. Sur les faces d'extrémité de la bague extérieure sont formés deux embrèvement, positionnés en face d'une portion annulaire plane d'extrémité des rondelles. Le moment d'inertie des rondelles par rapport à un axe quelconque perpendiculaire à l'axe de rotation est très faible, ce qui se traduit par une faible raideur des rondelles en flexion, et par des modes propres d'oscillation à des fréquences relativement basses. Pour éviter qu'en fonctionnement, les rondelles soient excitées sur leur mode propre et qu'à l'état déformé leur trajectoire rencontre celle d'une pièce environnante, par exemple d'un roulement adjacent, on augmente l'épaisseur des rondelles, afin d'augmenter le moment d'inertie.

### EXPOSE DE L'INVENTION

L'invention vise à remédier aux inconvénients de l'état de la technique et à proposer un roulement d'encombrement axial particulièrement réduit, restant compatible avec des charges radiales et axiales élevées ou des chocs en direction axiale, tout en conservant une maitrise des jeux fonctionnels existant pour une bague de roulement mobile par rapport à des flasques de roulement.

Pour ce faire est proposé, selon un premier aspect de l'invention, un roulement, comportant :
- deux bagues de roulement, à savoir une bague intérieure et une bague extérieure entourant la bague intérieure.
- des corps roulants logés dans un volume annulaire entre les deux bagues de roulement et aptes à rouler sur des chemins de roulement annulaires formés sur les deux bagues de roulement de manière à permettre une rotation relative entre les deux bagues de roulement autour d'un axe de révolution du roulement, et
- au moins un premier flasque annulaire solidarisé sur une première des deux bagues de roulement de manière à recouvrir au moins partiellement une première face d'extrémité axiale de la première des deux bagues de roulement, le premier flasque s'étendant radialement depuis la première des deux bagues de roulement vers la deuxième des deux bagues de roulement de manière à fermer une première extrémité axiale du volume annulaire, une portion annulaire d'extrémité du premier flasque étant positionnée axialement en regard et à distance d'une première face de guidage annulaire de la deuxième des deux bagues de roulement, la face de guidage annulaire de la deuxième des deux bagues de roulement présentant un premier embrèvement axial.

De façon caractérisante, un repli axial de la portion annulaire d'extrémité du premier flasque est logé dans le premier embrèvement, en recouvrement axial avec l'un des chemins de roulement, qui est formé sur la deuxième des deux bagues de roulement. Ce repli de la portion annulaire d'extrémité rigidifie le flasque en flexion et permet d'en limiter l'épaisseur.

En réalisant ce repli axial dans un embrèvement d'une face guidage annulaire d'une bague de roulement, on obtient cette rigidification sans augmenter l'encombrement axial du roulement et en maitrisant, lors de l'assemblage, le jeu fonctionnel entre le flasque et la bague de roulement mobile par rapport audit flasque. Les modes de déformation dynamique en direction axiale, essentiellement des modes de flexion du flasque, ont une faible amplitude, ce qui permet de placer le roulement à faible distance des pièces environnantes sans risque de collision. De plus, dans une hypothèse très défavorable où les efforts axiaux sur le roulement engendrent une déformation faisant partiellement sortir le repli de l'embrèvement où il est habituellement logé, la forme du repli évite que l'arête de rebord du flasque soit directement soumise à un choc destructif avec un objet dans l'environnement du roulement. Le repli peut même former une rampe qui, en venant au contact d'un tel objet, repousse le flasque, le redresse et le ramène en position.

Dans un mode de réalisation, le chemin de roulement annulaire formé sur la deuxième des deux bagues de roulement s'étend axialement jusqu'à la première face de guidage annulaire de la deuxième des deux bagues de roulement, le cas échéant avec une zone de transition constituée par un chanfrein. Les efforts radiaux repris par le roulement sont ainsi répartis sur l'intégralité du chemin de roulement de la deuxième bague.

Dans un mode de réalisation, le flasque annulaire est en contact surfacique avec une première face annulaire plane d'extrémité axiale de la première des deux bagues. Le contact surfacique permet le transfert des efforts axiaux entre la première des deux bagues de roulement et le premier flasque.

Dans un mode de réalisation, l'un des chemins de roulement annulaire est formé sur la première des deux bagues de roulement et s'étend axialement jusqu'à la première face annulaire plane de la première des deux bagues de roulement, le cas échéant avec une zone de transition constituée par un chanfrein. Les efforts radiaux repris par le roulement sont ainsi répartis sur l'intégralité du chemin de roulement de la première bague.

Dans un mode de réalisation, la deuxième des deux bagues de roulement est tangente à un plan géométrique d'extrémité perpendiculaire à l'axe de révolution, une partie du flasque étant positionnée axialement d'un côté du plan géométrique contenant la deuxième des deux bagues de roulement , une autre partie du flasque étant de préférence positionnée d'un côté du plan géométrique opposé à la deuxième des deux bagues de roulement. La saillie axiale du flasque par rapport à ce plan géométrique de référence est ainsi nulle pour la partie du flasque étant positionnée axialement entre le plan géométrique et la deuxième des deux bagues de roulement, réduisant ainsi l'encombrement.

Dans un mode de réalisation, le premier flasque est constitué par une tôle, de préférence une tôle ayant une épaisseur inférieure à 1 mm . La faible épaisseur du premier flasque vise à une minimisation de la dimension axiale du roulement.

Dans un mode de réalisation, le repli est formé par une déformation plastique de la tôle.

Dans un mode de réalisation, le repli axial de la portion annulaire d'extrémité présente un chanfrein tourné radialement à l'opposé de la deuxième des deux bagues de roulement. L'épaisseur de l'arête du flasque est alors plus faible et l'arête est plus éloignée de la première face de guidage annulaire de la deuxième des deux bagues de roulement de sorte à limiter le risque que cette arête affleure par rapport à la première face de guidage annulaire de la deuxième des deux bagues de roulement.

Dans un mode de réalisation, le repli axial de la portion annulaire d'extrémité présente un chanfrein tourné radialement vers la deuxième des deux bagues de roulement. Ainsi, la profondeur de l'embrèvement axial de la face de guidage annulaire de la deuxième bague est réduite, ce qui permet de maximiser les efforts mécaniques repris par ladite deuxième bague de roulement sans augmenter le risque de contact indésiré entre la deuxième des deux bagues de roulement et le repli axial de la portion annulaire d'extrémité

Dans un mode de réalisation, la deuxième des deux bagues est la bague extérieure.

Dans un mode de réalisation, la bague extérieure est un galet et présente une face annulaire de roulement tournée à l'opposé de l'axe de révolution du roulement. La bague extérieure constitue par exemple ainsi un galet apte à rouler sur une came de mécanique d'armures de métier à tisser.

Dans un mode de réalisation, la face annulaire de roulement est bombée en coupe axiale.

Dans un mode de réalisation, la première face d'extrémité axiale de la première des deux bagues de roulement est plane, le premier flasque annulaire présentant une portion d'appui annulaire plane en appui surfacique sur la première face d'extrémité axiale de la première des deux bagues de roulement, et une portion intermédiaire entre la portion d'appui et le repli axial, la portion intermédiaire étant plane ou tronconique avec un angle d'ouverture supérieur à 176° par rapport à un sommet centré sur l'axe de révolution du roulement et situé d'un côté du premier flasque annulaire opposé à la premier des deux bagues de roulement.

Dans un mode de réalisation, le premier flasque comporte des échancrures réparties sur un périmètre extérieur de la portion annulaire d'extrémité. De telles échancrures permettent l'emboutissage du flasque de manière à former le repli axial.

Suivant un mode de réalisation, les corps roulants sont des rouleaux cylindriques. Le roulement est soumis de manière prédominante à des efforts radiaux, et les efforts axiaux sont repris par le premier flasque.

Suivant un mode de réalisation, les chemins de roulement ne comportent pas de collet entre les rouleaux cylindriques et le premier flasque, les rouleaux cylindriques étant directement en regard du premier flasque. Le premier flasque assure alors une fonction de guidage des corps roulants.

Suivant un mode de réalisation particulièrement avantageux, la face extérieure du premier flasque est située dans le plan de référence de la première extrémité axiale de la première des deux bagues de roulement. Le plan de référence commun constitue un plan d'extrémité axiale de l'ensemble constitué par la première des deux bagues et le premier flasque. La face extérieure plane du premier flasque et la face plane d'extrémité de la première extrémité axiale de la première des deux bagues sont coplanaires, et permettent d'envisager un empilement du roulement sur un autre roulement similaire, et une mobilité relative des roulements, minimisant les frottements et les chocs.

Suivant un mode de réalisation, le roulement comporte en outre au moins un deuxième flasque annulaire solidarisé sur la première des deux bagues de roulement de manière à recouvrir au moins partiellement une deuxième face d'extrémité axiale de la première des deux bagues de roulement, le deuxième flasque s'étendant radialement depuis la première des deux bagues de roulement vers la deuxième des deux bagues de roulement de manière à fermer une deuxième extrémité axiale du volume annulaire, une portion annulaire d'extrémité du deuxième flasque étant positionnée axialement en regard et à distance d'une deuxième face de guidage annulaire de la deuxième des deux bagues de roulement, la deuxième face de guidage annulaire de la deuxième des deux bagues de roulement présentant un deuxième embrèvement axial, un repli axial de la portion annulaire d'extrémité du deuxième flasque étant logé dans le deuxième embrèvement, en recouvrement axial avec l'un des chemins de roulement, qui est formé sur la deuxième des deux bagues de roulement.. Le cas échéant, le premier flasque et le deuxième flasque peuvent avoir une configuration symétrique par rapport à un plan de symétrie perpendiculaire à l'axe de révolution.

Suivant un mode de réalisation, les chemins de roulement ne comportent pas de collet entre les rouleaux cylindriques et le deuxième flasque, les rouleaux cylindriques étant directement en regard du deuxième flasque. Le deuxième flasque assure alors une fonction de guidage des corps roulants.

Dans un mode de réalisation, le premier flasque est réalisé à partir d'une tôle emboutie.

Dans un mode de réalisation, le premier flasque est réalisé en acier carbonitruré.

Pour augmenter la charge utile, on a intérêt à maximiser le nombre de corps roulants dans le volume disponible. Ainsi, suivant un mode de réalisation, les corps roulants sont disposés dans le volume entre les deux bagues de roulement sans interposition d'une cage de guidage.

Le roulement selon l'invention a notamment vocation à être utilisé dans le domaine du tissage comme galet pour une machine de formation de la foule, notamment pour une mécanique d'armures. En pratique, plusieurs roulements identiques ont vocation à être montés sur des axes parallèles fixe, à proximité les uns des autres. Les bagues extérieures sont pourvues d'une surface de roulement extérieure, et tournent indépendamment les unes des autres. Elles servent de galets pour des cames de la machine.

La configuration du roulement permet de minimiser l'épaisseur des flasques, et donc de maximiser la largeur des rouleaux et des chemins de roulement, ce qui permet d'augmenter la charge radiale des galets.

Selon un autre aspect de l'invention, celle-ci a trait à un procédé de fabrication d'un roulement suivant lequel :
- on forme deux bagues de roulement, à savoir une première bague et une deuxième bague, incluant le formage d'un embrèvement axial sur une face de guidage annulaire de la deuxième bague,
- on forme un premier flasque avec une portion annulaire présentant un repli axial,
- on positionne le premier flasque annulaire sur une première face d'extrémité axiale d'une première des deux bagues de roulement,
- on positionne la deuxième des deux bagues de roulement,
- on loge des corps roulants dans un volume annulaire entre les deux bagues de roulement, de manière à permettre aux corps roulants de rouler sur des chemins de roulement annulaires formés sur les deux bagues de roulement en engendrant une rotation relative entre les deux bagues de roulement autour d'un axe de révolution du roulement, l'une des deux bagues de roulement étant une bague extérieure entourant l'autre bague de roulement constituant une bague intérieure, le premier flasque annulaire s'étendant radialement depuis la première des deux bagues de roulement vers la deuxième des deux bagues de roulement de manière à fermer une première extrémité axiale du volume annulaire, et
- on positionne la portion annulaire d'extrémité du premier flasque axialement en regard et à distance de la première face de guidage annulaire, de manière à loger le repli axial de la portion annulaire du premier flasque dans l'embrèvement axial de la face de guidage annulaire.

### BREVE DESCRIPTION DES FIGURES

D'autres caractéristiques et avantages de l'invention ressortiront à la lecture de la description qui suit, en référence aux figures annexées, qui illustrent :
- [Fig. 1] : une vue en coupe d'un roulement selon un premier mode de réalisation de l'invention ;
- [Fig. 2] : une vue de face d'un flasque de roulement selon le même mode de réalisation ;
- [Fig. 3] : un détail de la figure 1 ;
- [Fig. 4] un détail de la figure 1 selon un autre mode de réalisation ;
- [Fig. 5] un détail de la figure 1 selon un autre mode de réalisation ;

Pour plus de clarté, les éléments identiques ou similaires sont repérés par des signes de référence identiques sur l'ensemble des figures.

### DESCRIPTION DÉTAILLÉE DE MODES DE REALISATION

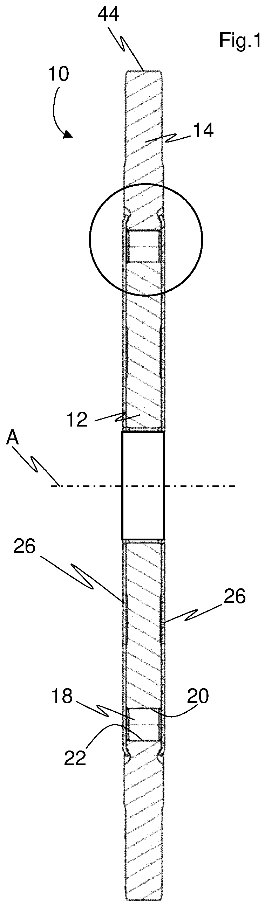

Sur la figure 1 est illustré un roulement **10,** qui comporte deux bagues de roulement, à savoir une bague intérieure **12** et une bague extérieure **14,** délimitant un volume annulaire **16** dans lequel sont logés des corps roulants **18,** ici des rouleaux cylindriques. Les rouleaux **18** sont aptes à rouler sur des chemins de roulement annulaires **20, 22,** en l'occurrence cylindriques, formés sur les deux bagues de roulement **12, 14** de manière à permettre une rotation relative entre les deux bagues de roulement **12, 14** autour d'un axe de révolution **A** du roulement **10.** Les rouleaux **18** sont disposés dans le volume annulaire **16** entre les deux bagues de roulement **12, 14** sans interposition d'une cage de guidage, ce qui permet de maximiser le nombre des rouleaux **18.** Les bagues de roulement **12, 14** ne comportent pas de collets de guidage en regard des faces d'extrémité **24** des rouleaux, ce qui permet de maximiser la dimension axiale des rouleaux **18.**

Les deux bagues de roulement **12, 14** sont encadrées par deux flasques annulaires de guidage **26** identiques. Chacun des flasques de guidage **26** est situé à une extrémité axiale du roulement **10,** et est en contact surfacique avec une première face annulaire plane **42** d'extrémité axiale de la première des deux bagues, ici la bague intérieure **12.** La suite de la description s'attachera à un premier des deux flasques de guidage **26,** à son positionnement et son orientation par rapport à une première extrémité de la bague intérieure **12,** étant entendu que le deuxième flasque **26** est plaqué à l'extrémité axiale opposée de la bague intérieure **12** de façon identique.

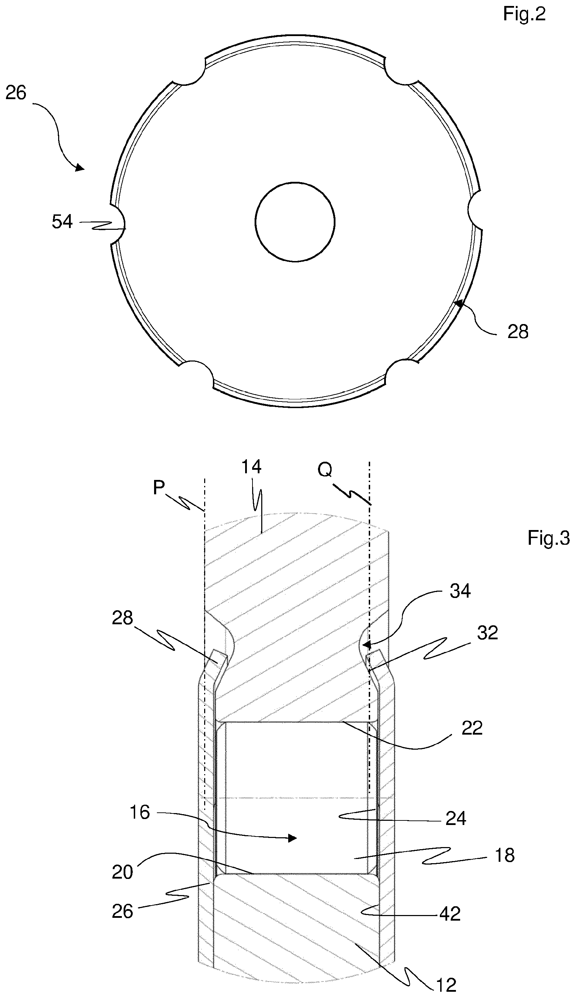

La figure 2 illustre un flasque **26** hors de son montage dans le roulement. Le flasque **26** présente une forme sensiblement circulaire et une portion annulaire d'extrémité. La portion annulaire d'extrémité du flasque **26** comprend en outre un repli axial **28.** Le flasque **26** est constitué par une tôle, de préférence une tôle ayant une épaisseur inférieure à 1mm. Pour former le flasque **26,** la tôle est déformée plastiquement, par exemple par un procédé d'emboutissage. En particulier, pour obtenir un repli axial **28** sur une pièce circulaire emboutie, le flasque **26** présente sur sa portion annulaire d'extrémité des échancrures **54** réparties, de préférence uniformément sur tout le périmètre extérieur de la portion annulaire d'extrémité.

Comme illustré sur la figure 3, le flasque **26** s'étend radialement depuis la bague intérieure **12** vers la bague extérieure **14** de manière à fermer au moins partiellement, et en l'occurrence totalement, une des extrémités axiales du volume annulaire **16.** La portion annulaire d'extrémité du premier flasque **26** est positionnée axialement en regard et à distance d'une face de guidage annulaire **32** de la bague extérieure **14.** Chaque flasque de guidage **26** cumule ainsi des fonctions de guidage des rouleaux **18,** de protection du volume annulaire **16** contre les polluants extérieurs, de maintien du lubrifiant dans le volume annulaire **16,** et de guidage de la bague extérieure **14** par rapport à la bague intérieure **12.** Le repli axial **28** du flasque **26** est logé dans un embrèvement axial **34** de la face de guidage annulaire **32** de la bague extérieure **14,** en recouvrement axial avec le chemin de roulement **22** de la bague extérieure **14,** au sens où il existe au moins un plan **Q** perpendiculaire à l'axe de révolution **A** qui coupe à la fois le chemin de roulement **22** et le repli axial **28.**

La bague extérieure **14** est tangente à un plan géométrique **P** d'extrémité perpendiculaire à l'axe de révolution **A,** une partie du flasque **26** est positionnée axialement entre le plan géométrique **P** et la bague de roulement **14.** Une autre partie du flasque **26** est de préférence positionnée axialement entre le plan géométrique **P** et la bague intérieure **12.**

Le chemin de roulement annulaire **22** est formé sur la bague extérieure **14** de roulement et s'étend axialement jusqu'à la première face de guidage annulaire **32** de la bague extérieure **14** avec une zone de transition constituée par un chanfrein.

Le chemin de roulement annulaire **20** est formé sur la bague intérieure **12** de roulement et s'étend axialement jusqu'à la première face annulaire plane **42** de la bague intérieure **12** avec une zone de transition constituée par un chanfrein.

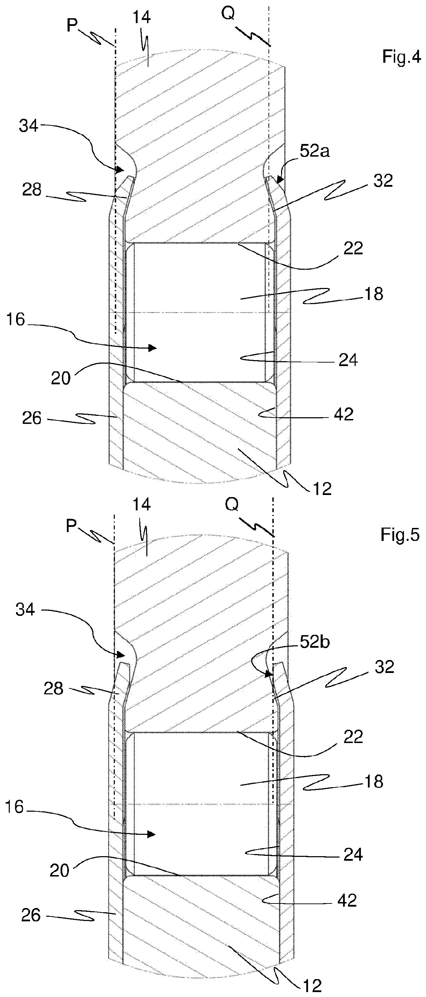

Le mode de réalisation de la figure 4 diffère du mode de réalisation illustré par la figure 3 en ce que le repli axial de la portion annulaire d'extrémité présente un chanfrein **52a** tourné radialement à l'opposé de la bague extérieure **14.** Le chanfrein **52a** est ainsi formé sur un rebord du repli **28** opposé à un centre de courbure du repli **28.**

La bague extérieure **14** présente une face annulaire de roulement **44.** La face annulaire de roulement **44** est tournée à l'opposé de l'axe de révolution **A** du roulement. Dans les modes de réalisation décrits, la face annulaire de roulement **44** présente un profil bombé en coupe axial pour constituer un galet, par exemple apte à rouler sur une came de mécanique d'armures de métier à tisser.

Le mode de réalisation de la figure 5 diffère du mode de réalisation illustré par la figure 3 en ce que le repli axial de la portion annulaire d'extrémité présente un chanfrein **52b** tourné radialement vers de la bague extérieure **14.** Le chanfrein **52b** est ainsi formé sur un rebord du repli **28** tourné vers un centre de courbure du repli **28.**

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Roulement (10), comportant :
- deux bagues de roulement, à savoir une bague intérieure (12) et une bague extérieure (14) entourant la bague intérieure (12),
- des corps roulants (18) logés dans un volume annulaire (16) entre les deux bagues de roulement (12, 14) et aptes à rouler sur des chemins de roulement annulaires (20, 22) formés sur les deux bagues de roulement (12, 14) de manière à permettre une rotation relative entre les deux bagues de roulement (12, 14) autour d'un axe de révolution du roulement (A), et
- au moins un premier flasque annulaire (26) solidarisé sur une première des deux bagues (12, 14) de roulement de manière à recouvrir au moins partiellement une première face d'extrémité axiale de la première des deux bagues de roulement (12, 14), le premier flasque (26) s'étendant radialement depuis la première des deux bagues de roulement (12, 14) vers la deuxième des deux bagues de roulement (12, 14) de manière à fermer une première extrémité axiale du volume annulaire (16), une portion annulaire d'extrémité du premier flasque (26) étant positionnée axialement en regard et à distance d'une première face de guidage annulaire (32) de la deuxième des deux bagues de roulement (12, 14), la première face de guidage annulaire (32) de la deuxième des deux bagues de roulement présentant un premier embrèvement (34) axial,
**caractérisé en ce qu'**un repli axial (28) de la portion annulaire d'extrémité du premier flasque (26) est logé dans le premier embrèvement (34), en recouvrement axial avec un chemin de roulement correspondant parmi des chemins de roulement annulaire (20, 22), le chemin de roulement correspondant étant formé sur la deuxième des deux bagues de roulement, de sorte qu'il existe au moins un plan (Q) perpendiculaire à l'axe de révolution (A) qui coupe à la fois le chemin de roulement correspondant (22) et le repli axial (28).

2. Roulement (10) selon la revendication 1, **caractérisé en ce que** le chemin de roulement annulaire correspondant (22) s'étend axialement jusqu'à la première face de guidage annulaire (32) de la deuxième des deux bagues de roulement, le cas échéant avec une zone de transition constituée par un chanfrein.

3. Roulement (10) selon l'une quelconque des revendications précédentes, **caractérisé en ce que** le flasque annulaire (26) est en contact surfacique avec une première face annulaire plane (42) d'extrémité axiale de la première des deux bagues de roulement.

4. Roulement (10) selon l'une quelconque des revendications précédentes, **caractérisé en ce que** la deuxième des deux bagues de roulement (12, 14) est tangente à un plan géométrique (P) d'extrémité perpendiculaire à l'axe de révolution (A), une partie du flasque (26) étant positionnée axialement d'un côté du plan géométrique (P) contenant la deuxième des deux bagues de roulement (12, 14), une autre partie du flasque (26) étant de préférence positionnée axialement d'un côté du plan géométrique opposé à la deuxième des deux bagues de roulement (12, 14).

5. Roulement (10) selon l'une quelconque des revendications précédentes, **caractérisé en ce que** le premier flasque (26) est constitué par une tôle, de préférence une tôle ayant une épaisseur inférieure à 1 mm, le repli (28) étant de préférence formé par une déformation plastique de la tôle.

6. Roulement (10) selon l'une quelconque des revendications précédentes, **caractérisé en ce que** :
- le repli axial (28) de la portion annulaire d'extrémité présente un chanfrein (52a) tourné radialement à l'opposé de la deuxième des deux bagues de roulement; et/ou
- le repli axial (28) de la portion annulaire d'extrémité présente un chanfrein (52b) tourné radialement vers la deuxième des deux bagues de roulement.

7. Roulement (10) selon l'une quelconque des revendications précédentes, la deuxième des deux bagues (12, 14) est la bague extérieure (14).

8. Roulement (10) selon la revendication 7, **caractérisé en ce que** la bague extérieure (14) est un galet et présente une face annulaire de roulement (44) tournée à l'opposé de l'axe de révolution (A) du roulement.

9. Roulement selon la revendication 8, **caractérisé en ce que** la face annulaire de roulement (44) est bombée en coupe axiale.

10. Roulement selon l'une quelconque des revendications précédentes, **caractérisé en ce que** la première face d'extrémité axiale de la première des deux bagues de roulement (12, 14) est plane, le premier flasque annulaire (26) présentant une portion d'appui annulaire plane en appui surfacique sur la première face d'extrémité axiale de la première des deux bagues de roulement (12, 14), et une portion intermédiaire entre la portion d'appui et le repli axial (28), la portion intermédiaire étant plane ou tronconique avec un angle d'ouverture supérieur à 176° par rapport à un sommet centré sur l'axe de révolution (A) du roulement et situé d'un côté du premier flasque annulaire (26) opposé à la premier des deux bagues de roulement (12, 14).

11. Roulement (10) selon l'une quelconque des revendications précédentes, **caractérisé en ce que** le premier flasque (26) comporte des échancrures (54) réparties sur un périmètre extérieur de la portion annulaire d'extrémité.

12. Roulement (10) selon l'une quelconque des revendications précédentes, **caractérisé en ce qu'**il comporte au moins un deuxième flasque annulaire (26) solidarisé sur la première des deux bagues (12, 14) de roulement de manière à recouvrir au moins partiellement une deuxième face d'extrémité axiale de la première des deux bagues de roulement (12, 14), le deuxième flasque (26) s'étendant radialement depuis la première des deux bagues de roulement (12, 14) vers la deuxième des deux bagues de roulement (12, 14) de manière à fermer une deuxième extrémité axiale du volume annulaire (16), une portion annulaire d'extrémité du deuxième flasque (26) étant positionnée axialement en regard et à distance d'une deuxième face de guidage annulaire (32) de la deuxième des deux bagues de roulement (12, 14), la deuxième face de guidage annulaire (32) de la deuxième des deux bagues de roulement présentant un deuxième embrèvement (34) axial, un repli axial (28) de la portion annulaire d'extrémité du deuxième flasque (26) étant logé dans le deuxième embrèvement (34), en recouvrement axial avec le chemin de roulement correspondant (22), de sorte qu'il existe au moins un plan perpendiculaire à l'axe de révolution (A) qui coupe à la fois le chemin de roulement correspondant (22) et le repli axial (28).

13. Roulement (10) selon l'une quelconque des revendications précédentes, **caractérisé en ce que** le premier flasque (26) est une tôle emboutie.

14. Roulement (10) selon l'une quelconque des revendications précédentes, **caractérisé en ce que** le premier flasque (26) est en acier carbonitruré.

15. Procédé de fabrication d'un roulement suivant lequel :
- on forme deux bagues de roulement, à savoir une première bague et une deuxième bague, incluant le formage d'un embrèvement axial (34) sur une face de guidage annulaire (32) de la deuxième bague,
- on forme un premier flasque (26) avec une portion annulaire présentant un repli axial (28),
- on positionne le premier flasque annulaire (26) sur une première face d'extrémité axiale d'une première des deux bagues de roulement,
- on positionne la deuxième des deux bagues de roulement,
- on loge des corps roulants (18) dans un volume annulaire (16) entre les deux bagues de roulement, de manière à permettre aux corps roulants (18) de rouler sur des chemins de roulement annulaires (20, 22) formés sur les deux bagues de roulement en engendrant une rotation relative entre les deux bagues de roulement autour d'un axe de révolution (A) du roulement, l'une des deux bagues de roulement étant une bague extérieure (14) entourant l'autre bague de roulement constituant une bague intérieure (12), le premier flasque annulaire (26) s'étendant radialement depuis la première des deux bagues de roulement (12, 14) vers la deuxième des deux bagues de roulement (12, 14) de manière à fermer une première extrémité axiale du volume annulaire (16), et
- on positionne la portion annulaire d'extrémité du premier flasque (26) axialement en regard et à distance de la première face de guidage annulaire (32), de manière à loger le repli axial (28) de la portion annulaire du premier flasque (26) dans l'embrèvement axial (34) de la face de guidage annulaire (32), en recouvrement axial avec un chemin de roulement correspondant (22) parmi les chemins de roulement (20, 22), le chemin de roulement correspondant (22) étant formé sur la deuxième des deux bagues de roulement, de sorte qu'il existe au moins un plan (Q) perpendiculaire à l'axe de révolution (A) qui coupe à la fois le chemin de roulement correspondant (22) et le repli axial (28).

## Patentansprüche

1. Lager (10), umfassend:
- zwei Lagerringe, nämlich einen Innenring (12) und einen den Innenring (12) umgebenden Außenring (14),
- Wälzkörper (18), die in einem ringförmigen Volumen (16) zwischen den beiden Lagerringen (12, 14) untergebracht sind und auf ringförmigen Laufbahnen (20, 22) abrollen können, die an den beiden Lagerringen (12, 14) ausgebildet sind, um eine relative Drehung zwischen den beiden Lagerringen (12, 14) um eine Drehachse des Lagers (A) zu ermöglichen, und
- mindestens einen ersten ringförmigen Flansch (26), der an einem ersten der beiden Lagerringe (12, 14) so befestigt ist, dass er eine erste axiale Endfläche des ersten der beiden Lagerringe (12, 14) zumindest teilweise abdeckt, wobei sich der erste Flansch (26) radial vom ersten der beiden Lagerringe (12, 14) zum zweiten der beiden Lagerringe (12, 14) erstreckt, um ein erstes axiales Ende des ringförmigen Volumens (16) zu verschließen, wobei ein ringförmiger Endabschnitt des ersten Flansches (26) axial gegenüber und mit Abstand zu einer ersten ringförmigen Führungsfläche (32) des zweiten der beiden Lagerringe (12, 14) positioniert ist, wobei die erste ringförmige Führungsfläche (32) des zweiten der beiden Lagerringe eine erste axiale Aussparung (34) aufweist,
**dadurch gekennzeichnet, dass** eine axiale Falte (28) des ringförmigen Endabschnitts des ersten Flansches (26) in der ersten Aussparung (34) untergebracht ist, in axialer Überlappung mit einer entsprechenden Laufbahn unter den ringförmigen Laufbahnen (20, 22), wobei die entsprechende Laufbahn auf dem zweiten der beiden Lagerringe ausgebildet ist, so dass es mindestens eine Ebene (Q) senkrecht zur Drehachse (A) gibt, die sowohl die entsprechende Laufbahn (22) als auch die axiale Falte (28) schneidet.

2. Lager (10) nach Anspruch 1, **dadurch gekennzeichnet, dass** sich die entsprechende ringförmige Laufbahn (22) axial bis zur ersten ringförmigen Führungsfläche (32) des zweiten der beiden Lagerringe erstreckt, gegebenenfalls mit einem durch eine Fase gebildeten Übergangsbereich.

3. Lager (10) nach einem der vorstehenden Ansprüche,
**dadurch gekennzeichnet, dass** der ringförmige Flansch (26) in Flächenkontakt mit einer ersten ebenen ringförmigen Fläche (42) des axialen Endes des ersten der beiden Lagerringe steht.

4. Lager (10) nach einem der vorstehenden Ansprüche,
**dadurch gekennzeichnet, dass** der zweite der beiden Lagerringe (12, 14) eine geometrische Endebene (P) senkrecht zur Drehachse (A) tangiert, wobei ein Teil des Flansches (26) axial auf einer Seite der geometrischen Ebene (P) positioniert ist, die den zweiten der beiden Lagerringe (12, 14) enthält, und ein anderer Teil des Flansches (26) vorzugsweise axial auf einer Seite der geometrischen Ebene gegenüber dem zweiten der beiden Lagerringe (12, 14) positioniert ist.

5. Lager (10) nach einem der vorstehenden Ansprüche,
**dadurch gekennzeichnet, dass** der erste Flansch (26) aus einem Blech, vorzugsweise einem Blech mit einer Dicke von weniger als 1 mm, gebildet ist, wobei die Falte (28) vorzugsweise durch plastische Verformung des Blechs gebildet ist.

6. Lager (10) nach einem der vorstehenden Ansprüche,
**dadurch gekennzeichnet, dass:**
- die axiale Falte (28) des ringförmigen Endabschnitts eine radial vom zweiten der beiden Lagerringe weg weisende Fase (52a) aufweist; und/oder
- die axiale Falte (28) des ringförmigen Endabschnitts eine radial zum zweiten der beiden Lagerringe weisende Fase (52b) aufweist.

7. Lager (10) nach einem der vorstehenden Ansprüche, wobei der zweite der beiden Ringe (12, 14) der Außenring (14) ist.

8. Lager (10) nach Anspruch 7, **dadurch gekennzeichnet, dass** der Außenring (14) eine Rolle ist und eine ringförmige, von der Drehachse (A) des Lagers weg weisende Rollfläche (44) aufweist.

9. Lager nach Anspruch 8, **dadurch gekennzeichnet, dass** die ringförmige Rollfläche (44) im Axialschnitt gekrümmt ist.

10. Lager nach einem der vorstehenden Ansprüche,
**dadurch gekennzeichnet, dass** die erste axiale Endfläche des ersten der beiden Lagerringe (12, 14) flach ist, wobei der erste ringförmige Flansch (26) einen flachen ringförmigen Stützabschnitt in Oberflächenunterstützung auf der ersten axialen Endfläche des ersten der beiden Lagerringe (12, 14) und einen Zwischenabschnitt zwischen dem Stützabschnitt und der axialen Falte (28) aufweist, wobei der Zwischenabschnitt flach oder kegelstumpfförmig ist und einen Öffnungswinkel größer als 176° relativ zu einem Scheitelpunkt aufweist, der auf der Drehachse (A) des Lagers zentriert ist und sich auf einer Seite des ersten ringförmigen Flansches (26) gegenüber dem ersten der beiden Lagerringe (12, 14) befindet.

11. Lager (10) nach einem der vorstehenden Ansprüche,
**dadurch gekennzeichnet, dass** der erste Flansch (26) Kerben (54) aufweist, die über einen Außenumfang des ringförmigen Endabschnitts verteilt sind.

12. Lager (10) nach einem der vorstehenden Ansprüche,
**dadurch gekennzeichnet, dass** es mindestens einen zweiten ringförmigen Flansch (26) umfasst, der an dem ersten der beiden Lagerringe (12, 14) so befestigt ist, dass er eine zweite axiale Endfläche des ersten der beiden Lagerringe (12, 14) zumindest teilweise abdeckt, wobei sich der zweite Flansch (26) radial von dem ersten der beiden Lagerringe (12, 14) in Richtung des zweiten der beiden Lagerringe (12, 14) erstreckt, um ein zweites axiales Ende des ringförmigen Volumens (16) zu verschließen, wobei ein ringförmiger Endabschnitt des zweiten Flansches (26) axial gegenüber und mit Abstand zu einer zweiten ringförmigen Führungsfläche (32) des zweiten der beiden Lagerringe (12, 14) positioniert ist, wobei die zweite ringförmige Führungsfläche (32) des zweiten der beiden Lagerringe eine zweite axiale Aussparung (34) aufweist, wobei eine axiale Falte (28) des ringförmigen Endabschnitts des zweiten Flansches (26) in der zweiten Aussparung (34) untergebracht ist, in axialer Überlappung mit der entsprechenden Laufbahn (22), so dass mindestens eine Ebene senkrecht zur Drehachse (A) vorhanden ist, die sowohl die entsprechende Laufbahn (22) als auch die axiale Falte (28) schneidet.

13. Lager (10) nach einem der vorstehenden Ansprüche,
**dadurch gekennzeichnet, dass** der erste Flansch (26) ein gestanztes Blech ist.

14. Lager (10) nach einem der vorstehenden Ansprüche,
**dadurch gekennzeichnet, dass** der erste Flansch (26) aus karbonitriertem Stahl besteht.

15. Verfahren zur Herstellung eines Lagers, gemäß dem:
- man zwei Lagerringe formt, nämlich einen ersten Ring und einen zweiten Ring, einschließlich der Formung einer axialen Aussparung (34) an einer ringförmigen Führungsfläche (32) des zweiten Rings,
- man einen ersten Flansch (26) mit einem ringförmigen Abschnitt formt, der eine axiale Falte (28) aufweist,
- man den ersten ringförmigen Flansch (26) auf einer ersten axialen Endfläche eines ersten der beiden Lagerringe anordnet,
- man den zweiten der beiden Lagerringe anordnet,
- man die Wälzkörper (18) in einem ringförmigen Volumen (16) zwischen den beiden Lagerringen unterbringt, so dass die Wälzkörper (18) auf ringförmigen Laufbahnen (20, 22) abrollen können, die an den beiden Lagerringen ausgebildet sind, wodurch eine relative Drehung zwischen den beiden Lagerringen um eine Drehachse (A) des Lagers erzeugt wird, wobei einer der beiden Lagerringe ein Außenring (14) ist, der den anderen Lagerring umgibt, der einen Innenring (12) bildet, wobei sich der erste ringförmige Flansch (26) radial vom ersten der beiden Lagerringe (12, 14) in Richtung des zweiten der beiden Lagerringe (12, 14) erstreckt, um ein erstes axiales Ende des ringförmigen Volumens (16) zu verschließen, und
- man den ringförmigen Endabschnitt des ersten Flansches (26) axial gegenüberliegend und mit Abstand von der ersten ringförmigen Führungsfläche (32) positioniert, um die axiale Falte (28) des ringförmigen Abschnitts des ersten Flansches (26) in der axialen Aussparung (34) der ringförmigen Führungsfläche (32) aufzunehmen, in axialer Überlappung mit einer entsprechenden Laufbahn (22) unter den Laufbahnen (20, 22), wobei die entsprechende Laufbahn (22) auf dem zweiten der beiden Lagerringe ausgebildet ist, sodass es mindestens eine Ebene (Q) senkrecht zur Drehachse (A) gibt, die sowohl die entsprechende Laufbahn (22) als auch die axiale Falte (28) schneidet.

## Claims

1. Rolling bearing (10), comprising:
- two bearing rings, namely an inner ring (12) and an outer ring (14) surrounding the inner ring (12),
- rolling bodies (18) accommodated in an annular volume (16) between the two bearing rings (12, 14) and capable of rolling on annular raceways (20, 22) formed on the two bearing rings (12, 14) so as to allow relative rotation between the two bearing rings (12, 14) about an axis of revolution (A) of the rolling bearing, and
- at least one first annular flange (26) fixed to a first of the two bearing rings (12, 14) so as to at least partially overlap a first axial end face of the first of the two bearing rings (12, 14), the first flange (26) extending radially from the first of the two bearing rings (12, 14) toward the second of the two bearing rings (12, 14) so as to close a first axial end of the annular volume (16), an annular end portion of the first flange (26) being positioned axially opposite and at a distance from a first annular guide face (32) of the second of the two bearing rings (12, 14), the first annular guide face (32) of the second of the two bearing rings having a first axial recess (34),
**characterized in that** an axial fold (28) of the annular end portion of the first flange (26) is accommodated in the first recess (34), axially overlapping a corresponding raceway from among the annular raceways (20, 22), the corresponding raceway being formed on the second of the two bearing rings, so that there is at least one plane (Q) perpendicular to the axis of revolution (A) which intersects both the corresponding raceway (22) and the axial fold (28).

2. Rolling bearing (10) according to claim 1, **characterized in that** the corresponding annular raceway (22) extends axially up to the first annular guide face (32) of the second of the two bearing rings, optionnaly with a transition region formed by a chamfer.

3. Rolling bearing (10) according to any one of the preceding claims,
**characterized in that** the annular flange (26) is in surface contact with a first annular flat axial end face (42) of the first of the two bearing rings.

4. Rolling bearing (10) according to any one of the preceding claims,
**characterized in that** the second of the two bearing rings (12, 14) is tangent to an end geometric plane (P) perpendicular to the axis of revolution (A), one part of the flange (26) being positioned axially on one side of the geometric plane (P) containing the second of the two bearing rings (12, 14), another part of the flange (26) preferably being positioned axially on one side of the geometric plane opposite the second of the two bearing rings (12, 14).

5. Rolling bearing (10) according to any one of the preceding claims,
**characterized in that** the first flange (26) is made of a metal sheet, preferably a metal sheet with a thickness of less than 1 mm, the fold (28) preferably being formed by plastic deformation of the metal sheet.

6. Rolling bearing (10) according to any one of the preceding claims,
**characterized in that:**
- the axial fold (28) of the annular end portion has a chamfer (52a) facing radially away from the second of the two bearing rings; and/or
- the axial fold (28) of the annular end portion has a chamfer (52b) facing radially toward the second of the two bearing rings.

7. Rolling bearing (10) according to any one of the preceding claims, the second of the two rings (12, 14) being the outer ring (14).

8. Rolling bearing (10) according to claim 7, **characterized in that** the outer ring (14) is a roller and has an annular rolling face (44) facing away from the axis of revolution (A) of the rolling bearing.

9. Rolling bearing according to claim 8, **characterized in that** the annular rolling face (44) is convex in an axial section.

10. Rolling bearing according to any one of the preceding claims,
**characterized in that** the first axial end face of the first of the two bearing rings (12, 14) is flat, the first annular flange (26) having a flat annular support portion bearing on the surface of the first axial end face of the first of the two bearing rings (12, 14), and an intermediate portion between the support portion and the axial fold (28), the intermediate portion being flat or frustoconical with an opening angle greater than 176° relative to an apex centered on the axis of revolution (A) of the rolling bearing and located on one side of the first annular flange (26) opposite the first of the two bearing rings (12, 14).

11. Rolling bearing (10) according to any one of the preceding claims,
**characterized in that** the first flange (26) comprises indentations (54) distributed over an outer perimeter of the annular end portion.

12. Rolling bearing (10) according to any one of the preceding claims,
**characterized in that** it comprises at least one second annular flange (26) fixed to the first of the two bearing rings (12, 14) so as to at least partially overlap a second axial end face of the first of the two bearing rings (12, 14), the second flange (26) extending radially from the first of the two bearing rings (12, 14) toward the second of the two bearing rings (12, 14) so as to close a second axial end of the annular volume (16), an annular end portion of the second flange (26) being positioned axially opposite and at a distance from a second annular guide face (32) of the second of the two bearing rings (12, 14), the second annular guide face (32) of the second of the two bearing rings having a second axial recess (34), an axial fold (28) of the annular end portion of the second flange (26) being accommodated in the second recess (34), axially overlapping the corresponding raceway (22), so that there is at least one plane perpendicular to the axis of revolution (A) which intersects both the corresponding raceway (22) and the axial fold (28).

13. Rolling bearing (10) according to any one of the preceding claims,
**characterized in that** the first flange (26) is a stamped metal sheet.

14. Rolling bearing (10) according to any one of the preceding claims,
**characterized in that** the first flange (26) is made of carbonitrided steel.

15. Method for manufacturing a rolling bearing wherein:
- two bearing rings are formed, namely a first ring and a second ring, including the forming of an axial recess (34) on an annular guide face (32) of the second ring,
- a first flange (26) is formed with an annular portion having an axial fold (28),
- the first annular flange (26) is positioned on a first axial end face of a first of the two bearing rings,
- the second of the two bearing rings is positioned,
- rolling bodies (18) are accommodated in an annular volume (16) between the two bearing rings, so as to enable the rolling bodies (18) to roll on annular raceways (20, 22) formed on the two bearing rings, generating relative rotation between the two bearing rings about an axis of revolution (A) of the rolling bearing, one of the two bearing rings being an outer ring (14) surrounding the other bearing ring constituting an inner ring (12), the first annular flange (26) extending radially from the first of the two bearing rings (12, 14) toward the second of the two bearing rings (12, 14) so as to close a first axial end of the annular volume (16), and
- the annular end portion of the first flange (26) is positioned axially opposite and at a distance from the first annular guide face (32), so as to accommodate the axial fold (28) of the annular portion of the first flange (26) in the axial recess (34) of the annular guide face (32), axially overlapping a corresponding raceway (22) from among the raceways (20, 22), the corresponding raceway (22) being formed on the second of the two bearing rings, so that there is at least one plane (Q) perpendicular to the axis of revolution (A) which intersects both the corresponding raceway (22) and the axial fold (28).
